# EUROPÄISCHE PATENTSCHRIFT

(11) **EP 2 125 614 B1**
(45) Veröffentlichungstag und Bekanntmachung des Hinweises auf die Patenterteilung: **04.05.2011**
(21) Anmeldenummer: 08708043.8
(22) Anmeldetag: 21.01.2008
(51) Int. Cl.: C01B 21/093

(54) **VERFAHREN ZUR HERSTELLUNG VON KRISTALLINER HYDROXYLAMIN-O-SULFONSÄURE**
METHOD FOR PRODUCING CRYSTALLINE HYDROXYLAMINE-O-SULFONIC ACID
PROCÉDÉ DE FABRICATION D'ACIDE HYDROXYLAMINO-O-SULFONIQUE CRISTALLIN

(30) Priorität: 25.01.2007 EP 07101193
(43) Veröffentlichungstag der Anmeldung: 02.12.2009
(73) Patentinhaber: BASF SE, 67056 Ludwigshafen (DE)
(72) Erfinder: WITTENBECHER, Lars, 40545 Düsseldorf (DE); GOTH, Reinhold, 67065 Ludwigshafen (DE)
(86) Internationale Anmeldenummer: PCT/EP2008/050643
(87) Internationale Veröffentlichungsnummer: WO 2008/090124

(56) Entgegenhaltungen:
- DE-A1- 3 601 217
- DE-A1- 4 325 438
- DATABASE WPI Week 198002 Thomson Scientific, London, GB; AN 1980-02407C XP002486678 & JP 54 149400 A (UBE IND LTD) 22. November 1979 (1979-11-22)

## Beschreibung

Die vorliegende Erfindung betrifft ein Verfahren zur Herstellung von kristalliner Hydroxylamin-O-sulfonsäure.

Hydroxylamin-O-sulfonsäure ist ein vielfach eingesetztes Reagenz zur Herstellung von Nitrilen aus Aldehyden und von Hydrazinen aus Aminen.

Es ist bekannt, Hydroxylamin-O-sulfonsäure durch Umsetzung von festem Hydroxylammoniumsulfat oder -chlorid mit Chlorsulfonsäure oder Oleum herzustellen. Beispiele hierfür finden sich u. a. in DE 36 01 217 A1, DE 43 25 438 A1 sowie in DE 16 67 513.

DE 43 25 438 A1 beschreibt die Darstellung von Hydroxylamin-O-sulfonsäure aus festem Hydroxylammoniumsulfat, Schwefelsäure und 65 %igem Oleum bzw. Chlorsulfonsäure bei 85 °C. Durch Zugabe von Eisessig und Di-n-butylether wird Hydroxylamin-O-sulfonsäure aus der Reaktionsmischung auskristallisiert, danach filtriert, mit Petrolether gewaschen und im Vakuum bei 50 °C getrocknet.

DE 36 01 217 A1 beschreibt die Darstellung von Hydroxylamin-O-sulfonsäure aus Hydroxylammoniumsulfat und Oleum bei erhöhter Temperatur (110 °C), sowie die Abtrennung von Hydroxylamin-O-sulfonsäure von der Schwefelsäure und die Aufarbeitung der noch Hydroxylamin-O-sulfonsäure enthaltenen Schwefelsäure.

DE 16 67 513 beschreibt die Hydroxylamin-O-sulfonsäure Synthese aus Hydroxylammoniumsulfat, Oleum oder Chlorsulfonsäure zwischen 0 °C und 80 °C in inerten, organischen Solventien (z. B. Tetrachlorkohlenstoff, Methylenchlorid, Trichlorbenzol), in denen Hydroxylamin-O-sulfonsäure unlöslich ist, und von denen Hydroxylamin-O-sulfonsäure leicht abgetrennt werden kann. Nach der Abtrennung wird Hydroxylamin-O-sulfonsäure nochmals mit den organischen Solventien gewaschen und getrocknet.

US 3,281,209 beschreibt einen Prozess zur Darstellung von Hydroxylamin-O-sulfonsäure, indem aus Nitromethan und 100 %iger Schwefelsäure zunächst Hydroxylammoniumsulfat dargestellt und dieses dann mit SO₃ zu Hydroxylamin-O-sulfonsäure umgesetzt wird. Hydroxylamin-O-sulfonsäure wird aus der Reaktionsmischung direkt durch Zugabe von Ethylacetat und Kühlen auf - 10 °C bis +20 °C auskristallisiert und abfiltriert.

JP 54 149400 A beschreibt ein Verfahren zur Herstellung von Hydroxylamin-O-Sulfonsäure, bei dem Hydroxylamin oder ein Hydroxylammonium-Salz, zum Beispiel Sulfat, Nitrat oder Phosphat, bei 20-100°C mit rauchender Schwefelsäure reagiert wird. Nach einer Reaktionsdauer von 1-5 Stunden wird das Reaktionsgemisch während eines Zeitraums von 30 Minuten - 2 Stunden abgekühlt. Die geformten Kristalle werden abgeschieden und mit einem Essigsäureester, z.B. Essigsäureethylester, behandelt und wiederum mit Essigsäureester weiter gereinigt.

Die nach den oben genannten Verfahren hergestellten Kristalle der Hydroxylamin-O-sulfonsäure erfüllen nicht immer die gestellten Anforderungen im Hinblick auf die gewünschte Reinheit und Partikelgröße. Häufig ist zu beobachten, dass die erhaltenen

Kristalle zu feinteilig sind und sich daher nur mit hohem technischen Aufwand filtrieren lassen.

Es war daher Aufgabe der vorliegenden Erfindung, ein Verfahren zur Herstellung kristalliner Hydroxylamin-O-sulfonsäure bereitzustellen, mit dem ein gut filtrierbares, hochreines Produkt in guter Ausbeute erhalten wird.

Diese Aufgabe wurde gelöst durch die Bereitstellung eines Verfahrens gemäß Anspruch 1.

Als Reagenz zur Herstellung von Hydroxylamin-O-sulfonsäure im Verfahrensschritt a. wird Oleum in Schwefelsäure verwendet. Dabei wird vorzugsweise Hydroxylamin oder ein Hydroxylammoniumsalz in konzentrierter Schwefelsäure vorgelegt und mit Oleum versetzt. Es ist aber auch möglich, konzentrierte Schwefelsäure und Oleum oder Chlorsulfonsäure vorzulegen und mit Hydroxylamin oder einem Hydroxylammoniumsalz zu versetzen.

Bei Oleum (auch rauchende Schwefelsäure genannt) handelt es sich um eine Lösung von Schwefeltrioxid (SO₃ in Schwefelsäure (H₂SO₄ mit veränderlichen Anteilen an Schwefeltrioxid (z. B. 24 % oder 65 % SO₃).

Die Reaktionstemperatur liegt erfindungsgemäß im Bereich von 105 bis 115 °C.

Zur Erzielung der gewünschten grobkörnigen Kristalle wird die Reaktionsmischung im Verfahrensschritt b. für einen Zeitraum von 2 bis 24 Stunden, bevorzugt 4 bis 12 Stunden, besonders bevorzugt 6 bis 10 Stunden bei einer Temperatur im Bereich von 105 bis 115 °C nachgerührt.

Anschließend erfolgt die Abkühlung der Reaktionsmischung innerhalb eines Zeitraums von 1 bis 12 Stunden, bevorzugt 4 bis 10 Stunden, besonders bevorzugt 6 bis 9 Stunden auf eine Temperatur im Bereich von 10 bis 40 °C, bevorzugt im Bereich von 15 bis 35 °C, besonders bevorzugt im Bereich von 20 bis 30 °C.

Die Isolierung der kristallisierten Hydroxylamin-O-sulfonsäure aus der Reaktionsmischung im Verfahrensschritt d. erfolgt nach bekannten und in der chemischen Verfahrensstechnik üblichen Trennmethoden wie z. B. Filtration oder Zentrifugation.

Zur Abtrennung der dem Rohprodukt anhaftenden Schwefelsäure und somit zur Erzielung der gewünschten Produktreinheit muß der Filterkuchen gründlich gewaschen werden. Aus dem Stand der Technik ist als Waschlösungsmittel u. a. Essigsäure bekannt.

Eine bevorzugte Ausführungsform des erfindungsgemäßen Verfahrens ist dadurch gekennzeichnet, dass man die Hydroxylamin-O-sulfonsäure Kristalle im Schritt d. mit Benzoesäuremethylester, wäscht.

Bei der Verwendung von Essigsäure kann es jedoch in Abhängigkeit vom Schwefelsäuregehalt zu einer Erwärmung des Filterkuchens kommen. Je nach Ausmaß dieser Erwärmung kann sich dabei ein Teil der Hydroxylamin-O-sulfonsäure irreversibel im Eisessig lösen und somit zu Ausbeuteverlusten führen. Um dieses Problem zu umgehen und die Ausbeuten an Hydroxylamin-O-sulfonsäure zu steigern, ist es von Vorteil, die Filtrationsapparatur zu kühlen.

Eine besonders bevorzugte Ausführungsform des erfindungsgemäßen Verfahrens ist somit dadurch gekennzeichnet, dass man die Hydroxylamin-O-sulfonsäure Kristalle im Schritt d. mit einem C₁-C₈-Alkylester einer aromatischen Carbonsäure wäscht.

Im erfindungsgemäßen Verfahren wird nach der Waschung der Kristalle mit Benzoesäuremethylester, zusätzlich mit Essigsäureethylester gewaschen, um den höhersiedenden Benzoesäureester zu verdrängen und somit die Zeit der nachfolgenden Trocknung zu verkürzen.

Das erfindungsgemäße Verfahren zur Herstellung von kristalliner Hydroxylamin-O-sulfonsäure ist dadurch gekennzeichnet, dass man
a. Hydroxylammoniumsulfat in Schwefelsäure auflöst und Oleum innerhalb eines Zeitraums von 0,2 bis 4 Stunden, bevorzugt 0,5 bis 3 Stunden, besonders bevorzugt 1 bis 2 Stunden bei einer Temperatur im Bereich von 105 bis 115 °C zudosiert,
b. die Reaktionsmischung nach Beendigung der Oleumzugabe für einen Zeitraum im Bereich von 6 bis 10 Stunden bei einer Temperatur im Bereich von 105 bis 115 °C nachrührt,
c. die Reaktionsmischung anschließend innerhalb eines Zeitraums von 6 bis 9 Stunden auf eine Temperatur im Bereich von 20 bis 30 °C abkühlt und
d. die gebildeten Hydroxylamin-O-sulfonsäure Kristalle abfiltriert und mit Benzoesäuremethylester und anschließend mit Essigsäureethylester wäscht.

Die nach dem erfindungsgemäßen Verfahren hergestellten Hydroxylamin-O-sulfonsäure Kristalle zeichnen sich durch eine Reinheit > 96 %, bevorzugt > 98 %, besonders bevorzugt > 99 % aus. Die mittlere Partikelgrößenverteilung der Kristalle (volumimetrischer mittlerer Durchmesser) liegt im Bereich von 50 bis 110 µm und hebt sich damit deutlich von den im Stand der Technik beschriebenen wesentlich kleineren Partikelgrößen ab.

Anhand der folgenden Beispiele soll das erfindungsgemäße Verfahren näher erläutert werden.

### Vergleichsbeispiel 1

### Darstellung von Hydroxylamin-O-sulfonsäure aus 65 %igem Oleum

872 g einer 97 %igen H₂SO₄ wurden vorgelegt und 266 g festes Hydroxylammoniumsulfat darin gelöst. Die Oleumdosierung zu der resultierenden 23,4 %igen Hydroxylammoniumsulfat/H₂S0₄-Lösung begann bei T = 25 °C. Es wurden innerhalb von 0.5 h insgesamt 578 g 65 %iges Oleum zudosiert, wobei die Temperatur am Ende der Reaktion durch externes Heizen auf T = 110 °C gebracht wurde. Anschließend wurde die Reaktionsmischung für 6 h bei dieser Temperatur gehalten. Die Abkühlung auf T = 25 °C erfolgte innerhalb von 8 h. Nach Abfiltrieren der Schwefelsäure, Waschen des Filterkuchens mit insgesamt 400 g Eisessig und 360 g Ethylacetat und Trocknen des Produkts im Vakuum bei T = 50 °C für 12 h wurden 287 g Hydroxylamin-O-sulfonsäure in einer Ausbeute von 78 % erhalten. Die Reinheit betrug > 98 %. Der gemessene Filterwiderstand während der Abtrennung der Kristalle betrug aη = 4*10¹³ mPas/m². Die mittlere Partikelgrößenverteilung der getrockneten Endprodukte aus zwei unterschiedlichen Ansätzen betrug 91,4 µm bzw. 106,4 µm (volumimetrischer mittlerer Durchmesser).

### Vergleichsbeispiel 2

### Darstellung von Hydroxylamin-O-sulfonsäure aus 24 %igem Oleum

Aus 239 g 97 %iger Schwefelsäure und 133 g 24 %igem Oleum wurden zunächst 372 g 100 %ige Schwefelsäure erzeugt, in die bei RT insgesamt 200 g Hydroxylammoniumsulfat suspendiert wurden. Der Ansatz wurde auf T = 60 °C aufgeheizt und innerhalb von 0,5 h mit 813 g 24 %igem Oleum versetzt, wobei die Temperatur am Ende der Reaktion durch externes Heizen auf T = 110 °C gebracht wurde. Anschließend wurde die Reaktionsmischung für 6 h bei dieser Temperatur gehalten. Die Abkühlung auf T = 25 °C erfolgte innerhalb von 8 h. Nach Abfiltrieren und Waschen des Filterkuchens mit insgesamt 300 g Eisessig und 270 g Ethylacetat wurden nach der Trocknung im Vakuum bei T = 50 °C für 12 h insgesamt 222 g Hydroxylamin-O-sulfonsäure in einer Ausbeute von 81 % bezogen auf das eingesetzte Hydroxylammoniumsulfat erhalten. Die Reinheit betrug > 98 %.

### Vergleichsbeispiel 3

### Darstellung von Hydroxylamin-O-sulfonsäure aus 65 %igem Oleum, Einfluss der Geschwindigkeit der Abkühlung

1205 g einer 100 %igen H₂SO₄ wurden vorgelegt und 250 g festes Hydroxylammoniumsulfat darin gelöst. Die Oleumdosierung zu der resultierenden 17,2 %igen Hydroxylammoniumsulfat/H₂S0₄-Lösung begann bei T = 25 °C. Während der Oleumzugabe wurde die Temperatur durch Kühlung auf T = 25 °C begrenzt. Die Kristallisation von HOSA begann bereits im Verlauf der Oleumzugabe. Ein Teil des gebildeten Feststoffs wurde dem Reaktionsgemisch entnommen und lichtmikroskopisch untersucht. Der Feststoff war mikrokristallin und sehr stark agglomeriert.

Der Ansatz wurde in drei gleiche Teile geteilt.

Es wurde erfolglos versucht, den ersten Teil des Reaktionsansatzes ohne seine weitere Behandlung über eine G3-Glasfilternutsche zu filtrieren.

Der zweite Teil des Ansatzes wurde nachträglich unter Rühren auf Tₘₐₓ = 110 °C aufgeheizt, für 1 h bei dieser Temperatur gerührt und schnell innerhalb von 1 h abgekühlt. Das schnelle Abkühlen führte dabei zu einem Produkt, welches über eine G3-Glasfilternutsche nicht filtrierbar war.

Der dritte Teil wurde nachträglich unter Rühren auf Tₘₐₓ = 110 °C aufgeheizt, für 1 h bei dieser Temperatur gerührt und langsam, innerhalb von 8 h auf T = 25 °C abgekühlt. Diese Prozedur führte zu einem filtrierbaren Produkt. Die Partikel waren relativ fein und agglomeriert, der Feststoff hatte einen Filterwiderstand von αη = 1,5*10¹⁴ mPas/m². Die mittlere Partikelgrößenverteilung des getrockneten Endprodukts beträgt 41,5 µm (volumimetrischer mittlerer Durchmesser) und entsprach etwa dem Stand der Technik.

### Beispiel 4

### Darstellung von Hydroxylamin-O-sulfonsäure - Verwendung von Benzoesäuremethylester als Waschlösungsmittel

872 g einer 97 %igen H₂SO₄ wurden vorgelegt und 266 g festes Hydroxylammoniumsulfat darin gelöst. Die Oleumdosierung zu der resultierenden, 23,4 %igen Hydroxylammoniumsulfat/H₂S0₄-Lösung begann bei T = 25 °C. Es wurden innerhalb von 0.5 h insgesamt 578 g 65 %iges Oleum zudosiert, wobei die Temperatur am Ende der Reaktion durch externes Heizen auf T = 110 °C gebracht wurde. Anschließend wurde die Reaktionsmischung für 6 h bei dieser Temperatur gehalten. Die Abkühlung auf T = 25 °C erfolgte innerhalb von 8 h. Nach Abfiltrieren der Kristalle wurde der schwefelsaure Filterkuchen mit 300 g 99 %igem Benzoesäuremethylester gewaschen. Dabei trat im Unterschied zur Verwendung von Eisessig nur eine leichte Erwärmung um etwa 10 °C des schwefelsauren Hydroxylamin-O-sulfonsäure-Rohprodukts auf.

## Patentansprüche

1. Verfahren zur Herstellung von kristalliner Hydroxylamin-O-sulfonsäure, **dadurch gekennzeichnet, dass** man
a. Hydroxylammoniumsulfat in Schwefelsäure auflöst und Oleum innerhalb eines Zeitraums von 0,2 bis 4 Stunden bei einer Temperatur im Bereich von 105 bis 115 °C zudosiert,
b. die Reaktionsmischung nach Beendigung der Oleumzugabe für einen Zeitraum im Bereich von 6 bis 10 Stunden bei einer Temperatur im Bereich von 105 bis 115 °C nachrührt,
c. die Reaktionsmischung anschließend innerhalb eines Zeitraums von 6 bis 9 Stunden auf eine Temperatur im Bereich von 20 bis 30 °C abkühlt und
d. die gebildeten Hydroxylamin-O-sulfonsäure Kristalle abfiltriert und mit Benzoesäuremethylester und anschließend mit Essigsäureethylester wäscht.

2. Verfahren zur Herstellung von kristalliner Hydroxylamin-O-sulfonsäure nach Anspruch 1, **dadurch gekennzeichnet, dass** man im Verfahrensschritt a. Oleum innerhalb eines Zeitraums von 1 bis 2 Stunden zudosiert.

## Claims

1. A process for preparing crystalline hydroxylamine-O-sulfonic acid, wherein
a. hydroxylammonium sulfate is dissolved in sulfuric acid and oleum is metered in at a temperature in the range from 105 to 115°C within a period of from 0.2 to 4 hours,
b. the reaction mixture, after the oleum addition has ended, is stirred at a temperature in the range of from 105 to 115°C for a further period in the range from 6 to 10 hours,
c. the reaction mixture is subsequently cooled to a temperature in the range from 20 to 30°C within a period of from 6 to 9 hours and
d. the hydroxylamine-O-sulfonic acid crystals formed are filtered off and washed with methyl benzoate and then with ethyl acetate.

2. The process for preparing crystalline hydroxylamine-O-sulfonic acid according to claim 1, wherein oleum is metered in within a period of from 1 to 2 hours in process step a.

## Revendications

1. Procédé pour la préparation d'acide hydroxylamine-O-sulfonique cristallin, **caractérisé en ce qu'**on
a. dissout du sulfate d'hydroxylammonium dans de l'acide sulfurique et on ajoute en dosant de l'oléum en un laps de temps de 0,2 à 4 heures à une température dans la plage de 105 à 115°C,
b. post-agite le mélange réactionnel après la fin de l'addition d'oléum pendant un laps de temps dans la plage de 6 à 10 heures à une température dans la plage de 105 à 115°C,
c. refroidit ensuite le mélange réactionnel en un laps de temps de 6 à 9 heures à une température dans la plage de 20 à 30°C et
d. sépare par filtration des cristaux d'acide hydroxylamine-O-sulfonique formés et les lave avec de l'ester méthylique de l'acide benzoïque et ensuite avec de l'ester éthylique de l'acide acétique.

2. Procédé pour la préparation d'acide hydroxylamine-O-sulfonique cristallin selon la revendication 1, **caractérisé en ce qu'**on ajoute en dosant dans l'étape de procédé a. l'oléum en un laps de temps de 1 à 2 heures.
